(19) Europäisches Patentamt
European Patent Office
Office européen des brevets

(11) Veröffentlichungsnummer: **0 137 077**
**B1**

(12) # EUROPÄISCHE PATENTSCHRIFT

(45) Veröffentlichungstag der Patentschrift: **27.01.88**

(51) Int. Cl.⁴: **G 21 C 17/06**

(21) Anmeldenummer: **83111634.8**

(22) Anmeldetag: **22.11.83**

(54) **Verfahren und Einrichtung zum Auffinden defekter Brennstabhüllrohre wassergekühlter Kernreaktoren.**

(30) Priorität: **12.10.83 DE 3337084**

(43) Veröffentlichungstag der Anmeldung: **17.04.85 Patentblatt 85/16**

(45) Bekanntmachung des Hinweises auf die Patenterteilung: **27.01.88 Patentblatt 88/4**

(84) Benannte Vertragsstaaten: **AT BE CH DE FR IT LI SE**

(56) Entgegenhaltungen:
**EP - A - 0 053 066**
**EP - A - 0 095 553**
**DE - A - 2 659 555**
**FR - A - 2 298 859**
**FR - A - 2 525 799**
**FR - A - 2 538 155**

(73) Patentinhaber: **BROWN BOVERI REAKTOR GmbH, Dudenstrasse 44, D-6800 Mannheim 1 (DE)**

(72) Erfinder: **Scharpenberg, Rainer, Ing. grad., Im Krappenklingen 32, D-6948 Waldmichelbach (DE)**

(74) Vertreter: **Dahlmann, Gerhard, Dipl.-Ing. et al, c/o Brown Boveri & Cie., AG Zentralbereich ZPT/P Postfach 351, D-6800 Mannheim (DE)**

EP 0 137 077 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung nach dem Oberbegriff des Patentanspruches 1.

Eine derartige Einrichtung ist aus der FR-A-2 298 859 bekannt. Dort muss die Sonde neben der waagerechten Bewegung in x- und y-Richtung noch eine vertikale Bewegung ausführen, um die Brennstäbe auf mehreren Ebenen besichtigen zu können. Es ist daher ein aus vier Säulen sowie einer Boden- und Deckplatte bestehendes Traggestell erforderlich, um die Führungsschienen für die vertikale Sondenbewegung zuverlässig abstützen zu können. Die beweglichen Bauteile des aus mehreren Schlitten bestehenden Manipulators sind dem Wasser des Brennelementlagerbeckens ungeschützt ausgesetzt, so dass eine Beeinträchtigung des präzisen Anfahrbetriebes sowie eine hohe Reparaturanfälligkeit nicht auszuschliessen ist.

Weiterhin ist aus dem «Tagungsbericht der Jahrestagung Kerntechnik 1980», S. 827 bis 831 des Deutschen Atomforums e.V. Bonn, ein Verfahren zum Auffinden defekter Brennstäbe mittels einer Ultraschallsonde bekannt. Die Sonde wird in der Nähe des Fussstückes in die Räume zwischen den Brennstäben eingefahren. Eine vertikale Fahrbewegung der Sonden ist daher nicht erforderlich. In diesem Tagungsbericht werden keine Angaben hinsichtlich des Zusammenspiels von Brennelement und Mechanik gemacht. Offenbar wurde dort nur Wert auf den erfolgreichen Ablauf des Durchschallungsverfahrens gelegt.

Es ist die Aufgabe der Erfindung, eine Einrichtung der eingangs genannten Art anzugeben, die für zwei in einer Ebene ablaufende Sondenfahrrichtungen präzise Fahrbewegungen erlaubt und eine geringe Reparaturanfälligkeit aufweist.

Gelöst wird diese Aufgabe erfindungsgemäss dadurch, dass das Traggestell über mehrere von seiner Basisplatte auskragende Bolzen auf der Oberseite eines Brennelementlagergestells arretiert ist, dass das Brennelement an einem Hebezeug hängt, dass eine der Basisplatte zugeordnete Zentrieraufnahme den Brennelementfuss an zwei gegenüberliegenden Seiten kontaktet und in ihrem Zentriermass variierbar ist, dass ein den Manipulator tragender Schlitten in zwei Richtungen verfahrbar ist, dass die Antriebselemente des Manipulators in einem wassergeschützten Raum angeordnet sind, der von einer die Antriebselemente tragenden Grundplatte und einer Abdeckhaube begrenzt ist, dass die Sonden ausserhalb des wassergeschützten Raumes angeordnet sind und dass ein die Bewegungsabläufe der Antriebselemente auf die Sonden übertragendes Bauteil die Grundplatte durchsetzt.

Dadurch wird das ca. vier Meter lange Brennelement zuverlässig gehalten und eine stets gleichbleibende Position zu dem den Manipulator tragenden Schlitten eingenommen. Weiterhin wird eine vorteilhaft ausgebildete Trennung zwischen den wassergeschützt unterzubringenden Antriebselementen und der Sondenbewegung erzielt.

Nach einer bevorzugten Ausgestaltung der Einrichtung sind in der Grundplatte T-förmig ausgebildete Nuten eingearbeitet, in denen die Bolzen nach Art eines Kulissensteines verschiebbar und festlegbar sind.

Damit wird auf einfache Weise die Anpassung der Bolzenabstände an verschiedene Lagergestellausführungen durchgeführt.

Eine weitere Ausgestaltung der Einrichtung sieht vor, dass die Zentrieraufnahme aus einem an der Grundplatte befestigten Gegenlager und einer demselben gegenüberliegend angeordneten Exzenterwelle besteht, die über eine Wippe fernbedienbar zu bewegen ist, wobei auf der Exzenterwellenachse ein Anschlag befestigt ist, der die Bewegung der Exzenterwelle begrenzt.

Der Vorteil ist hier neben der Variierbarkeit der Zentrieraufnahme vor allem darin zu sehen, dass durch einen Anschlag der höchste Punkt der Exzentrizität nicht überschritten werden kann.

Nach einer anderen Ausbildung ist die Zentrieraufnahme aus entlang einer Führung gegenläufig bewegbarer Backen gebildet.

Damit kann die Öffnung der Zentrieraufnahme verschiedenen Brennelementabmessungen besser angepasst werden.

Eine weitere Ausgestaltung der Einrichtung zeichnet sich dadurch aus, dass der den Manipulator tragende Schlitten in an der Grundplatte angebrachten Schienen geführt ist, dass die Schlittenbewegung über ein fernbedienbares Gestänge und/oder mit Hilfe eines hydraulisch/pneumatischen Zylinders erfolgt und dass der Schlitten mehrere Passbohrungen aufweist, in die sich von der Grundplatte auskragende, über eine Gewindeverbindung gesicherte Passstifte erstrecken.

Bei einer Störung der Manipulatorbewegung während einem Prüfvorgang kann über den den Manipulator tragenden Schlitten ein Ausfahren der Sonden aus den Räumen zwischen den Hüllrohren durchgeführt werden. Fällt dabei die hydraulisch/pneumatische Steuerung aus, so kann der Schlitten auch über das fernbedienbare Gestänge bewegt werden.

Eine andere erfindungsgemässe Lösung der Aufgabe sieht vor, dass das Traggestell eine Brennelement-Reparaturstation mit einem Brennelementbehälter ist, wobei das Brennelement über sein Kopfstück im Brennelementbehälter abgestützt und zentriert ist, dass der Manipulator auf einer Konsole der Brennelement-Reparaturstation angeordnet ist, dass die dem Fussstück zugewandten Hüllrohre des Brennelementes so weit über die Unterkante des Brennelementbehälters herausragen, dass mit den Sonden des Manipulators die Räume zwischen den Hüllrohren befahrbar sind, dass die Antriebselemente des Manipulators in einem wassergeschützten Raum angeordnet sind, der von einer die Antriebselemente tragenden Grundplatte und einer Abdeckhaube begrenzt ist, dass die Sonde ausserhalb des wassergeschützten Raumes angeordnet ist und dass ein die Bewegungsabläufe der Antriebselemente auf die Sonde übertragendes Bauteil die Grundplatte durchsetzt.

Die Kombination des Manipulators mit einer an sich bekannten Reparaturstation ermöglicht eine Beschleunigung des Brennelementwechselvorganges und somit einen Gewinn bei der Verfügbarkeit eines Kernkraftwerkes. Auch hier wird die von den wassergeschützt untergebrachten Antriebselementen ausgehende linienförmige Bewegung unter Zwischenschaltung einer Drehbewegung ohne Dichtungsprobleme auf die im Wasser des Brennelementlagerbeckens zu verfahrenden Sonden übertragen.

Damit über undichte Versorgungsleitungen in den wassergeschützten Raum des Manipulators kein Wasser eindringen kann, wird vorgesehen, dass der wassergeschützte Raum mit Druckluft beaufschlagt ist, wobei der Luftdruck höher ist als der ausserhalb des Raumes herrschende Wasserdruck und wobei Überwachungseinrichtungen eine Leckage des Raumes anzeigen.

Der Bauteil zur Umsetzung der linienförmigen in eine drehende Bewegung ist vorzugsweise so ausgebildet, dass der Bauteil einen durch die Grundplatte geführten und mit derselben verschraubten Flansch aufweist, dass sich koaxial durch den Flansch eine Hohlwelle und eine Vollwelle erstreckt, dass jeweils an den freien Enden von Voll- und Hohlwelle ein Hebel angelenkt ist, der mit einem weiteren Hebel derart gelenkig verbunden ist, dass innerhalb und ausserhalb des wassergeschützten Raumes je ein spiegelbildliches Hebelgestänge in Form eines Parallelogrammes gebildet ist, das innerhalb des Raumes an einem die linienförmigen Antriebsbewegungen ausführenden Schlitten und ausserhalb des Raumes an einem die linienförmigen Antriebsbewegungen ausführenden Schlitten und ausserhalb des Raumes an einem die Sonden tragenden Schlitten seinen Festpunkt hat.

Durch die koaxiale Anordnung von Hohl-und Vollwelle wird die Fehlergrösse beim Übertragen der Bewegungen gering gehalten.

Der den Festpunkt des im wassergeschützten Raum angeordneten Hebelgestänge bildende Schlitten wird von zwei über je einen Schrittmotor angetriebenen Kugelumlaufspindeln bewegt.

Die vom Schrittmotor vorgegebenen Wege werden dadurch spielfrei übertragen.

Zur Verhinderung einer Sondenbeschädigung ist dem die Sonden tragenden Schlitten ein Kraftaufnehmer als Anlaufschutz zugeordnet.

Die Einrichtungen der Erfindung werden anhand von Ausführungsbeispielen und der Zeichnungen Figur 1 bis 8 beschrieben.

Dabei zeigt die

Figur 1 in einer Seitenansicht zum Teil schematisch eine erfindungsgemässe Einrichtung,

Figur 2, 2a eine Ansicht entlang der Linie II–II der Figur 1,

Figur 3 eine teilweise im Schnitt gezeichnete Seitenansicht eines Manipulators,

Figur 4 eine Aufsicht des Manipulators nach Figur 3 bei abgenommener Abdeckhaube,

Figur 5 ein Bauteil zur Umsetzung der linienförmigen Bewegung in eine Drehbewegung im Längsschnitt,

Figur 6 den im Wasser eines Brennelementlagerbeckens angeordneten Teil des Manipulators,

Figur 7 eine Ansicht in Pfeilrichtung VII der Fig. 1 und die

Figur 8 eine andere erfindungsgemässe Einrichtung.

Die Fig. 1 zeigt in ausgezogenen Linien gezeichnet das als anbindung bezeichnete Traggestell 1 während seiner Absetzbewegung auf die Oberseite 2 der in unterbrochenen Linien angedeuteten Brennelementlagergestelle 3, die in einem nicht dargestellten Wasserbecken angeordnet sind. Bolzen 4 kragen von einer Basisplatte 5 des Traggestells 1 nach unten aus und dienen zur Arretierung der Anbindung in Bezugspunkten der Lagergestelle. Wie die Fig. 7 zeigt, sind die Bolzen in T-Nuten 6 geführt und befestigt, die in diagonal kreuzender Richtung in die Unterseite der Basisplatte eingebracht sind. Die Bolzen sind dabei nach der Art von Kulissensteinen ausgebildet und erlauben ein problemloses Einstellen der Bolzen auf verschiedene Lagergestellabmessungen. Ebenfalls in unterbrochenen Linien gezeichnet ist oberhalb der Anbindung ein Manipulator 7 und am Haken 8 eines nicht dargestellten Hebezeuges ein zu prüfendes Brennelement 9 zu sehen. Das Brennelement 9 und der Manipulator 7 befinden sich dabei unterhalb einer mehrere Meter dicken Wasserschicht. Wie später noch näher zu erläutern ist, bewegen sich die Sonden 10 innerhalb des Wassers. Über an einer Grundplatte 11 des Manipulators 7 angelenkten Passbolzen 12, ist derselbe auf einem Schlitten 13 abgestützt. Die Passbolzen 12 ragen dabei in entsprechende Passbohrungen 14 des Schlittens 13 und sind mittels Scheiben 15 und Schrauben 16 gesichert (Fig. 3). Wie auch aus der Fig. 2 zu ersehen ist, besteht der Schlitten 13 aus einer eine Aussparung 17 aufweisenden Platte 18, die an gegenüberliegenden Seiten mit Rollkörpern 19 versehen ist. Über die Rollkörper ist der Schlitten 13 in an der Basisplatte 5 befestigten Schienen 20 in Pfeilrichtung 21 bewegbar. Auf der Basisplatte 5 ist weiterhin eine Zentrieraufnahme 22 angeordnet. Sie besteht aus einem Gegenlager 23, das aufgrund seiner Langlochbefestigung 24 in Pfeilrichtung 25 zum Zwecke einer Anpassung an unterschiedliche Grössen des Brennelementfusses 26 verstellbar ist. Dem Gegenlager 23 gegenüberliegend ist auf der Basisplatte 5 eine Haltevorrichtung 27 für eine Exzenterwelle 28 befestigt. Auf einem abgesetzten Bund 29 der Exzenterwelle ist eine Wippe 30 angeordnet, an deren freien Enden nicht dargestellte Seile befestigt sind. Über diese Seile kann die Exzenterwelle gedreht werden. Ebenfalls auf dem abgesetzten Bund befindet sich ein Anschlag 31, der bei entsprechender Einstellung derart auf der Basisplatte zum Anliegen kommt, dass die Exzenterwelle vor Erreichen ihres höchsten Punktes an dem zu zentrierenden Brennelementfuss angelegt ist. Am Brennelementkopf 32 greift ein Hebezeug an, so dass das Brennelement 9 frei hängt und über den Brennelementfuss 26 zentriert ist. Im Bereich des zu zentrierenden Brennelements weist die Basisplatte eine Aussparung 36 auf, damit das Brennelement dort nicht aufsitzen kann. Alternativ zu der beschriebenen Zentrieraufnahme besteht sie aus zwei gegenläufig bewegbaren Backen 34 die entlang einer Führung 35 bewegbar sind (Fig. 2a). Der Schlitten 13, der zum Zwecke der Gewichtsersparnis mit einer Aussparung 17 versehen ist, ist in eine brennelementnahe Prüfposition (wie in Fig. 2 dargestellt) und in eine brennelementferne Position verstellbar. Der Bewegungsablauf erfolgt fernbedient in dem ein nicht dargestelltes Stangenwerkzeug von einem Standort ausserhalb des Wasserbeckens an dem Festpunkt 37 des Gestänges 38 in Eingriff gebracht und um den Festpunkt gedreht wird. Von der Basisplatte 5 kragen zwei mit einer Durchgangsbohrung 39 versehene Laschen 40 aus, die an der Unterseite der Basisplatte befestigt sind. In die Durchgangsbohrungen ist ein Gewindebolzen 41 mit Hilfe des gleichen Stangenwerkzeuges zum Zwecke der Festlegung des Schlittens 13 eindrehbar. Der Abstand zwischen den Durchgangsbohrungen ist somit gleich dem Fahrweg des Schlittens. Geführt ist der Gewindebolzen in einer an der Oberseite befestigten Lasche 42. Unweit dieser Lasche kragt ebenfalls von der Oberseite des Schlittens 13 ein Halteelement 43 aus, an dem das Gestänge 38 angreift und die Längsbewegung des Schlittens 13 auslöst. Der Schlitten lässt sich auch über hydraulische oder pneumatische Antriebselemente bewegen. Die handbetätigbare Gestängesteuerung bleibt jedoch erhalten, um bei Störungen an der Manipulatorsteuerung stets das Zurückfahren der Sonden 10 aus dem Brennelement zu gewährleisten. Liesse sich der Schlitten nicht zurückfahren, so wäre ein Ausbau mit Beschädigungen an Sonden, Manipulator und Brennelement verbunden.

Die Fig. 3 bis 6 zeigen den Manipulator bzw. Baugruppen desselben zum Bewegen der die Ultraschallprüfköpfe 44 tragenden Sonden. Eine Grundplatte 11, von der die Passbolzen 12 zum Schlitten 13 der Anbindung 1 wegführen, und eine Abdeckhaube 45 begrenzen einen wassergeschützten Raum 46, der die Antriebselemente einschliesst. Die Abdeckhaube ist mit Schrauben 47 unter Zwischenschaltung eines Rundschnurringes 48 an der Grundplatte 11 befestigt. Über die Verschraubung 49 gelangen die elektrischen Versorgungskabel in den wassergeschützten Raum 46. Durch eine Druckluftquelle 50 wird der wassergeschützte Raum mit einem Druck beaufschlagt, der höher ist als der im umgebenden Wasser 51 herrschende Druck. Eventuelle Leckagen im Bereich der Dichtungen führen nicht zu Beschädigungen an den Antriebselementen. Überwachungseinrichtungen 52 signalisieren einen Druckverlust, so dass rechtzeitig Gegenmassnahmen zur Abdichtung eingeleitet werden können. Der für eine Umwandlung einer linienförmigen in eine Drehbewegung und von der Drehbewegung wieder in eine gleichartige Linienbewegung erforderliche Bauteil 53 ist in der Fig. 3 im Zusammenspiel mit den Antriebselementen und in der Fig. 6 in seinen Einzelheiten dargestellt. Er weist einen Flansch 54 auf, der die Grundplatte 11 durchsetzt und mit derselben durch Schrauben 55 starr verbunden ist. Im Bereich des Durchtritts sorgen Rundschnurringe 56 für die notwendige Abdichtung. Eine Vollwelle 57 und eine Hohlwelle 58 sind koaxial zueinander und zum Flansch 54 angeordnet. Die Hohlwelle 58 ist über Kugellager 59 unter Zwischenschaltung einer Distanzhülse 60 im Flansch 54 geführt und in axialer Richtung abgestützt. Zur axialen Festlegung der Hohlwelle 58 dient ein mit derselben über eine Klauenkupplung 61 verschraubter Flansch 62, der mit einem Kugellager 63 gleichzeitig zur radialen Führung der Vollwelle 57 beiträgt. Seine weitere radiale Abstützung erfährt die Vollwelle durch ein unmittelbar in der Hohlwelle geführtes Kugellager 63. An ihrem in den wassergeschützten Raum 46 des Manipulators 7 ragenden Ende ist die Vollwelle 57 mit einem Vierkant 64 versehen, in das ein Träger 65 zentrierend aufgesteckt und über eine Klemmschraube 66 gesichert ist. Der Träger 65 dient unter Zwischenschaltung einer Distanzhülse 67 zur Abstützung der Vollwelle in axialer Richtung gegenüber der Hohlwelle und dem Flansch 54. Die dem Wasser 51 des Beckens zugewandten Kugellager sind mittels Rundschnurringen 68 und Wellendichtringen 69 gegen eindringendes Wasser geschützt. An den jeweils in dem Wasser angeordneten Enden weist die Vollwelle einen fest mit ihr verbundenen Träger 70 und die Hohlwelle eine Nabe 71 auf. An den Trägern 65, 70 der Vollwelle 57 sind spiegelbildlich ausgebildete und spiegelbildlich zueinander angeordnete Hebel 72, 73 verschraubt, so dass der im Wasser des Beckens angeordnete Hebel 73 die selbe Bewegung ausführt wie der im wassergeschützten Raum 46 angeordnete Hebel 72 sie vorgibt. Ihre lagengenaue Position erhalten die Hebel durch eine Nut/Federverbindung 74. Auch die auf gleiche Weise mit der Nabe 71 und dem Flansch 62 der Hohlwelle verbundenen Hebel 76, 77 sind spiegelbildlich ausgebildet und spiegelbildlich zueinander angeordnet. Die Art ihrer Befestigung ist in der Fig. 5a am Beispiel der Verbindung mit dem Träger 65 zu erkennen. Wie die Fig. 3 zeigt, ist im wassergeschützten Raum das freie Ende des an dem Träger 65 der Vollwelle befestigten Hebels 72 über einen kugelgelagerten Bolzen 75 mit einem weiteren Hebel 78 gelenkig verbunden. Auf gleiche Weise ist der am Flansch 62 der Hohlwelle 58 befestigte Hebel 77 ebenfalls über einen kugelgelagerten Bolzen 79 mit einem weiteren Hebel 80 verbunden. Die freien Enden der weiteren Hebel 78, 80 sind an einem Drehpunkt 81 zusammengeführt, um den sie über Kugellager 82 bewegbar sind. Ein Gewindebolzen 83, um den beide Hebel 78, 80 bewegbar sind, ist in einem Schlitten 84 eingeschraubt und bildet einen Festpunkt 85, der zusammen mit dem Schlitten 84 in X- oder Y-Richtung bewegbar ist.

In der Fig. 4 sind die Hebel 72, 76, 78, 80 lediglich in gestrichelten Linien angedeutet, um den Schlitten 84 und seine Antriebselemente besser erkennen zu können. Der Schlitten 84 wird von einer Mutter 86 getragen, die einer Kugelumlaufspindel 87 zugeordnet ist. Parallel zur Kugelumlaufspindel 87 erstreckt sich eine Stange 88, die über dem Schlitten 84 zugeordneten Gleitlager 89 zu dessen Führung bei Bewegung in Y-Richtung beiträgt. Soll eine solche Bewegung stattfinden, so wird die Kugelumlaufspindel 87 über einen Schrittmotor 90 mit Hilfe eines Zahnriementriebs 91 in Drehung versetzt und bewegt die Mutter 86 mit dem Schlitten 84. Ein gleichartiger Schrittmotor 92 sorgt über eine ebenfalls zahnriemengetriebene Kugelumlaufspindel 93 und eine parallel dazu erstreckte Stange 94 für eine Bewegung des Schlittens 84 in X-Richtung. Dazu ist es erforderlich, dass die Kugelumlaufspindel 93 und die ihr zugeordnete Stange 94 über Lagerböcke 95 unmittelbar auf der Grundplatte 11 befestigt sind. Der Schlitten 84 und die zugehörigen Antriebselemente sind dagegen von einem Gestell 96 getragen, das der Mutter 97 der Kugelumlaufspindel 93 und dem Gleitlager 99 der Stange 94 zugeordnet ist. Initiatoren 98 sorgen dafür, dass die Bewegungen des Schlittens 84 über vorgebbare Endstellungen nicht hinausführen können.

Den spiegelbildlich zu den Hebeln 72, 77 an der Nabe 71 der Hohlwelle 58 und dem Träger 70 der Vollwelle 57 im Wasser des Beckens angeordneten Hebeln 76, 73 sind gemäss Fig. 3 und 6 weitere Hebel 100, 101 über je einen kugelgelagerten Bolzen 102 zugeordnet. Mit ihren freien Enden bilden sie einen gemeinsamen Drehpunkt 103, der über einen in einem die Sonden tragenden Schlitten 104 durch einen dort eingeschraubten Gewindebolzen 105 seinen Festpunkt 106 hat. Der Festpunkt 85 des im wassergeschützten Raum 46 angeordneten Schlittens 84 und der Festpunkt 106 des die Sonden 10 tragenden Schlittens 104 sind also senkrecht übereinander angeordnet. Durch den die Grundplatte 11 durchsetzenden Bauteil 53 wird die punktgenaue Bewegung der beiden Festpunkte 85, 106 sichergestellt. Der Schlitten 104 ist in X-Richtung über eine in einem Gehäuse 107 befindlichen Stangen/Gleitlagerführung 108 bewegbar. In Y-Richtung sorgen zwei an der Unterseite der Grundplatte 11 über Lagerböcke 109 befestigte Stangen 110 für die Führung des Schlittens 104. Die eine Stange 110 ist von einem Gleitlager 111 umschlossen, während auf der anderen Stange 110 lediglich eine Rolle 112 abläuft. Von der Sondenhalterung 113 führt eine Versorgungsleitung 114 weg, die die Signale der Ultraschallprüfköpfe 44 zu einer nicht dargestellten Auswerteeinheit weiterleitet. Der Sondenhalterung 113 ist weiterhin ein über eine elektrische Zuleitung 115 versorgter Kraftaufnehmer 116 zugeordnet, um bei Anlaufen der Sonden 10 an ein Hindernis die Sondenfahrbewegung zu stoppen. Die Sondenhalterung ist weiterhin mit einem dem Querschnitt der Sonden angepassten Führungsstück 117 versehen, um die Sonden bei ihrer Fahrbewegung zu stützen.

Die Fig. 8 zeigt eine andere Ausführung der Einrichtung. Danach wird das Brennelement 9 in einen Brennelementbehälter 118 einer Brennelementreparaturstation 119 eingesetzt und in seiner vertikalen Erstreckung gehalten. Eine Führungsschiene 120 der Reparaturstation 119 ist am Boden 121 und einer Seitenwand 122 eines Brennelementlagerbeckens 123 gehalten. Unter Zwischenschaltung eines Seiltriebes 124 für eine vertikale Bewegung des Brennelementbehälters 118 entlang der Führungsschiene 120 und einer Antriebseinheit 125 für eine Schwenkbewegung des Brennelementbehälters um die Achse 126 wird dieser Behälter von der Führungsschiene getragen. In der bekannten Reparaturstation werden defekte Brennstäbe (bestehend aus Hüllrohren, die Brennstoffpellets enthalten und mit Endstopfen verschlossen sind) ausgebaut, die ausserhalb der Reparaturstation geortet wurden. Die vorgeschlagene Einrichtung erlaubt es, die defekten Brennstäbe innerhalb der Reparaturstation zu orten. Dazu ist das Brennelement über seinen Brennelementkopf 32 am oberen Ende des Brennelementbehälters abgestützt und arretiert. Es hängt in dem Brennelementbehälter frei nach unten und überragt mit seinem Brennelementfuss 26 die Unterkante 127 des aus einem Stahlgerippe bestehenden Behälters 118 soweit, dass die Hüllrohre 128 mindestens 10 mm aus dem Behälter hervortreten. Eine an der Führungsschiene 120 befestigte Konsole 129 trägt auf ihrer Konsolenplatte 130 über drei Passbohrungen 14a und dort abgestützte Passbolzen 12 den in Fig. 3 ausführlich dargestellten Manipulator 7. Eine am Kopf 32 angreifende Arretierung ist mit den Passbohrungen in der Konsole derart abgestimmt, dass die Sonden 10 des Manipulators 7 die Räume zwischen den Hüllrohren 128 abfahren können. Mit dieser neuartigen Kombination von Reparaturstation und Manipulator lassen sich die Ortung und der Austausch von defekten Brennstäben in einer einzigen Vorrichtung vereinigen.

Bezugszeichenliste

| | |
|---|---|
| 1 | Anbindung |
| 2 | Oberseite |
| 3 | Brennelementlagergestell |
| 4 | Bolzen |
| 5 | Basisplatte |
| 6 | T-Nuten |
| 7 | Manipulator |
| 8 | Haken |
| 9 | Brennelement |
| 10 | Sonden |
| 11 | Grundplatte |
| 12 | Passstifte |
| 13,84,104 | Schlitten |
| 14 | Passbohrungen |
| 15 | Scheibe |
| 16 | Schraube |
| 17,33,36 | Aussparung |
| 18 | Platte |
| 19 | Rollkörper |
| 20 | Schienen |
| 21,25 | Pfeilrichtung |
| 22 | Zentrieraufnahme |
| 23 | Gegenlager |
| 24 | Langlochbefestigung |
| 26 | Brennelementfuss |
| 27 | Haltevorrichtung |

| | |
|---|---|
| 28 | Exzenterwelle |
| 29 | Bund |
| 30 | Wippe |
| 31 | Anschlag |
| 32 | Brennelementkopf |
| 34 | Backen |
| 35 | Führung |
| 37,85,106 | Festpunkt |
| 38 | Gestänge |
| 39 | Durchgangsbohrung |
| 40,42 | Laschen |
| 41,83,105 | Gewindebolzen |
| 43 | Halteelement |
| 44 | Ultraschallprüfköpfe |
| 45 | Abdeckhaube |
| 46 | wassergeschützter Raum |
| 47,55 | Schraube |
| 48,56,68 | Rundschnurring |
| 49 | Verschraubung |
| 50 | Druckluftquelle |
| 51 | Wasser |
| 52 | Überwachungseinrichtungen |
| 53 | Bauteil |
| 54,62 | Flansch |
| 57 | Vollwelle |
| 58 | Hohlwelle |
| 59,63,82 | Kugellager |
| 60,67 | Distanzhülse |
| 61 | Klauenkupplung |
| 64 | Vierkant |
| 65,70 | Träger |
| 66 | Klemmschraube |
| 69 | Wellendichtring |
| 71 | Nabe |
| 72,73,76, 77,78,80, 100,101 | Hebel |
| 74 | Nut/Federverbindung |
| 75,79,102 | kugelgelagerter Bolzen |
| 81,103 | Drehpunkt |
| 86,97 | Mutter |
| 87,93 | Kugelumlaufspindel |
| 88,94,110 | Stange |
| 89, 99,111 | Gleitlager |
| 90,92 | Schrittmotor |
| 91 | Zahnriemenantrieb |
| 95,109 | Lagerbock |
| 96 | Gestell |
| 98 | Initiatoren |
| 107 | Gehäuse |
| 108 | Stangen/Gleitlagerführung |
| 112 | Rolle |
| 113 | Sondenhalterung |
| 114 | Versorgungsleitung |
| 115 | elektr. Zuleitung |
| 116 | Kraftaufnehmer |
| 117 | Führungsstück |
| 118 | Brennelementbehälter |
| 119 | Brennelementreparaturstation |
| 120 | Führungsschiene |
| 121 | Boden |
| 122 | Seitenwand |
| 123 | Brennelementlagerbecken |
| 124 | Seiltrieb |
| 125 | Antriebseinheit |
| 126 | Achse |
| 127 | Unterkante |
| 128 | Hüllrohre |
| 129 | Konsole |
| 130 | Konsolenplatte |

**Patentansprüche**

1. Einrichtung zum Prüfen von Brennstäben, die unter Einhaltung von Zwischenräumen zu einem kompletten Brennelement (9) zusammengefasst sind, wobei das Brennelement von einem Traggestell (1) gehalten ist und wobei dem Traggestell ein Manipulator (7) zum Bewegen einer in die Zwischenräume einfahrbaren, mit wenigstens einem Ultraschallprüfkopf bestückten Sonde (10) in zwei auf einer Ebene liegenden Koordinaten zugeordnet ist, dadurch gekennzeichnet, dass das Traggestell (1) über mehrere von einer Basisplatte (5) auskragende Bolzen (4) auf der Oberseite (2) eines Brennelementlagergestells (3) arretiert ist, dass das Brennelement (9) an einem Hebezeug hängt, dass eine der Basisplatte (5) zugeordnete Zentrieraufnahme (22) den Brennelementfuss (26) an zwei gegenüberliegenden Seiten kontaktet und in ihrem Zentriermass variierbar ist, dass ein den Manipulator (7) tragender Schlitten (13) in zwei Richtungen verfahrbar ist, dass die Antriebselemente des Manipulators (7) in einem wassergeschützten Raum (46) angeordnet sind, der von einer die Antriebselemente tragenden Grundplatte (11) und einer Abdeckhaube (45) begrenzt ist, dass die Sonde (10) ausserhalb des wassergeschützten Raumes (46) angeordnet ist und das ein die Bewegungsabläufe der Antriebselemente auf die Sonde übertragendes Bauteil (53) die Grundplatte (11) durchsetzt.

2. Einrichtung nach Anspruch 1, dadurch gekennzeichnet, dass in der Grundplatte (11) T-förmig ausgebildete Nuten (6) eingearbeitet sind, in denen die Bolzen (4) nach Art eines Kulissensteines verschiebbar und festlegbar sind.

3. Einrichtung nach Anspruch 1, dadurch gekennzeichnet, dass die Zentrieraufnahme (22) aus einem an der Grundplatte befestigten Gegenlager (23) und einer demselben gegenüberliegend angeordneter Exzenterwelle (28) besteht, die über eine Wippe (30) fernbedienbar zu bewegen ist, wobei auf der Exzenterwellenachse ein Anschlag (31) befestigt ist, der die Bewegung der Exzenterwelle begrenzt.

4. Einrichtung nach Anspruch 1, dadurch gekennzeichnet, dass die Zentrieraufnahme (22) aus entlang einer Führung (35) gegenläufig bewegbarer Backen (34) gebildet ist.

5. Einrichtung nach Anspruch 1, dadurch gekennzeichnet, dass der den Manipulator (7) tragende Schlitten (13) in an der Grundplatte (11) angebrachten Schienen (20) geführt ist, dass die Schlittenbewegung über ein fernbedienbares Gestänge (38) und/oder mit Hilfe eines hydraulisch/pneumatischen Zylinders erfolgt und dass der Schlitten (13) mehrere Passbohrungen (14) aufweist, in die sich von der Grundplatte (11) auskragende über eine Gewindeverbindung gesicherte Passstifte (12) erstrecken.

6. Einrichtung zum Prüfen von Brennstäben, die unter Einhaltung von Zwischenräumen zu einem kompletten Brennelement (9) zusammengefasst sind, wobei das Brennelement von einem Traggestell gehalten ist und wobei dem Traggestell ein Manipulator (7) zum Bewegen einer in die Zwischenräume einfahrbaren Sonde (10) in zwei auf einer Ebene liegenden Koordinaten zugeordnet ist, dadurch gekennzeichnet, dass das Traggestell (1) eine Brennelement-Reparaturstation mit einem Brennelementbehälter (118) ist, wobei das Brennelement (9) über sein Kopfstück (32) im Brennelementbehälter (18) abgestützt und zentriert ist, dass der Manipulator (7) auf einer Konsole (129) der Brennelement-Reparaturstation angeordnet ist, dass die dem Fussstück (26) zugewandten Hüllrohre des Brennelementes (9) so weit über die Unterkante (127) des Brennelementbehälters (118) herausragen, dass mit den Sonden (10) des Manipulators (7) die Räume zwischen den Hüllrohren befahrbar sind, dass die Antriebselemente des Manipulators in einem wassergeschützten Raum (46) angeordnet sind, der von einer die Antriebselemente tragenden Grundplatte (11) und einer Abdeckhaube (45) begrenzt ist, dass die Sonde (10) ausserhalb des wassergeschützten Raumes angeordnet ist und dass ein die Bewegungsabläufe der Antriebselemente auf die Sonde übertragendes Bauteil (53) die Grundplatte (11) durchsetzt.

7. Einrichtung nach Anspruch 1 oder 6, dadurch gekennzeichnet, dass der wassergeschützte Raum (46) mit Druckluft beaufschlagt ist, wobei der Luftdruck höher ist als der ausserhalb des Raumes (46) herrschende Wasserdruck und wobei Überwachungseinrichtung (52) eine Leckage des Raumes anzeigt.

8. Einrichtung nach Anspruch 1 oder 6, dadurch gekennzeichnet, dass der Bauteil (53) einen durch die Grundplatte (11) geführten und mit derselben verschraubten Flansch (54) aufweist, dass sich koaxial durch den Flansch (54) eine Hohlwelle (58) und eine Vollwelle (57) erstreckt, dass jeweils an den freien Enden von Voll- und Hohlwelle ein Hebel angelenkt ist, der mit einem weiteren Hebel derart gelenkig verbunden ist, dass innerhalb des wassergeschützten Raumes (46) je ein spiegelbildliches Hebelgestänge in Form eines Parallelogramms gebildet ist, dass innerhalb des Raumes (46) an einem die linienförmigen Antriebsbewegungen ausführenden Schlitten (84) und ausserhalb des Raumes an einem die Sonden (10) tragenden Schlitten (104) seinen Festpunkt (85, 106) hat.

9. Einrichtung nach Anspruch 8, dadurch gekennzeichnet, dass der den Festpunkt des Hebelgestänges bildende Schlitten (84) von zwei über je einen Schrittmotor (90, 92) angetriebene Kugelumlaufspindeln (87, 93) bewegt wird.

10. Einrichtung nach Anspruch 8, dadurch gekennzeichnet, dass dem die Sonden (10) tragenden Schlitten (104) ein Kraftaufnehmer (116) als Anlaufschutz für die Sonden (10) zugeordnet ist.

**Revendications**

1. Dispositif de contrôle de barreaux de combustible qui sont assemblés, avec intervalles réservés en un élément combustible complet (9), ledit élément combustible étant maintenu par un châssis-support (1) et un manipulateur (7) étant associé à ce dernier pour déplacer selon deux coordonnées dans un même plan une sonde (10) insérable dans les intervalles et équipée d'une tête de contrôle par ultra-sons, caractérisé par le fait que le châssis-support (1) est bloqué sur la face supérieure (2) d'un châssis de stockage d'élément combustible (3) par plusieurs chevilles (4) en saillie sur une plaque de base (5), l'élément combustible (9) est suspendu à un appareil de levage, une structure de centrage (22) associée à la plaque de base (5) est en contact avec le pied (26) de l'élément combustible sur deux côtés opposés et variable dans sa mesure de centrage, un chariot (13) portant le manipulateur (7) est déplaçable dans deux directions, les éléments de commande dudit manipulateur (7) sont placés dans un compartiment protégé de l'eau (46) qui est délimité par une plaque de fond (11) portant les éléments de commande et par un capot (45), la sonde (10) est placée à l'extérieur de ce compartiment protégé de l'eau (46) et une partie constitutive (53) transmettant le cours des déplacements des éléments de commande à la sonde traverse la plaque de fond (11).

2. Dispositif selon la revendication 1 caractérisé par le fait que des rainures (16) en forme de «T» dans lesquelles les chevilles (4) sont déplaçables en translation à la manière de coulisseaux et fixables sont creusées dans la plaque de fond (11).

3. Dispositif selon la revendication 1 caractérisé par le fait que la structure de centrage (22) se compose d'un contre-appui (23) fixé à la plaque de fond et d'un arbre à excentrique placé à l'opposé de ce dernier et déplaçable en télécommande par une bascule (30) et qu'une butée (31) qui délimite le mouvement dudit arbre à excentrique est en même temps fixée sur l'axe de ce dernier.

4. Dispositif selon la revendication 1 caractérisé par le fait que la structure de centrage (22) est formée de joues (34) déplaçables en des sens opposés le long d'un guidage (35).

5. Dispositif selon la revendication 1 caractérisé par le fait que le chariot (13) portant le manipulateur (7) est guidé dans des rails (20) fixés à la plaque de fond (11), son mouvement s'accomplissant par l'intermédiaire d'une timonerie (38) commandable à distance et/ou à l'aide d'un cylindre hydraulique/pneumatique, et ledit chariot (13) comporte plusieurs forages ajustés (14) dans lesquels s'étendent des chevilles ajustées (12) en saillie sur la plaque de fond (11) et bloquées par un assemblage fileté.

6. Dispositif de contrôle de barreaux de combustible assemblés avec intervalles réservés, en un élément combustible complet (9), ledit élément combustible étant maintenu par un châssis-support (1) et un manipulateur (7) étant associé à ce dernier pour déplacer selon deux coordonnées dans un même plan une sonde (10) insérable dans les intervalles, caractérisé par le fait que le châssis-support (1) est une station de réparation d'éléments combustibles avec un conteneur à élément combustible (118), ledit élément combustible (9) étant appuyé et centré dans ce dernier par sa tête (32), le manipulateur (7) est placé sur une console (129) de la station, les gaines de l'élément combustibel (9) tournées vers le pied (26) dépassant de l'arête inférieure (127) du conteneur à élément combustible (118) dans une mesure telle que les intervalles entre les gaines soient traversables par les sondes (10) du manipulateur (7), les éléments de commande dudit manipulateur sont placés dans un compartiment protégé de l'eau (46) qui est délimité par une plaque de fond (11) portant lesdits éléments de commande et par un capot (45), la sonde (10) est placée hors du compartiment protégé de l'eau et une partie constitutive (53) transmettant le cours des mouvements des éléments de commande à la sonde traverse la plaque de fond (11).

7. Dispositif selon la revendication 1 ou 6 caractérisé par le fait que le compartiment protégé de l'eau (46) est soumis à l'action d'air comprimé dont la pression est supérieure à la pression d'eau régnant à l'extérieur du compartiment (46) tandis que des dispositifs de surveillance (52) indiquent une voie d'eau dudit compartiment.

8. Dispositif selon la revendication 1 ou 6 caractérisé par le fait que la partie constitutive (53) comporte une bride (54) traversant la plaque de fond (11) et fixée sur celle-ci, un arbre creux (58) et un arbre plein (57) s'étendent coaxialement à travers ladite bride (54), aux extrémités libres de ces arbres est articulé chaque fois un levier relié de la sorte à un autre levier de telle façon qu'à l'intérieur du compartiment protégé de l'eau (46) soit chaque fois établies sous la forme d'un parallélogramme une timonerie qui, à l'intérieur du compartiment (46) et a son point fixe (85) sur un chariot (84) effectuant les mouvements de commande linéaires et, à l'extérieur dudit compartiment, son point fixe (106) sur un chariot (104) portant les sondes (10).

9. Dispositif selon la revendication 8 caractérisé par le fait que le chariot (84) formant le point fixe de la timonerie est déplacé par deux broches tournantes à billes (87, 93) entraînées par un moteur pas à pas (90, 92).

10. Dispositif selon la revendication 8 caractérisé par le fait qu'un absorbeur d'énergie (116) est associé, en tant que protection de butée pour les sondes (10), au chariot (34) portant celles-ci.

## Claims

1. Apparatus for the inspection of fuel rods which are combined to form a complete fuel assembly (9) while maintaining intermediate spaces, the fuel assembly being held by a carrier enclosure (1), the carrier enclosure being assigned a manipulator (7) for the moving in two coordinates in one plane of a probe (10) which is fitted with at least one ultrasonic test head and can be inserted into the intermediate spaces, characterized in that the carrier enclosure (1) is locked on the upper side (2) of a fuel assembly storage rack (3) by means of several bolts (4) protruding from a base plate (5), in that the fuel assembly (9) is suspended from a hoist, in that a centring receptacle (22) assigned to the base plate (5) contacts the fuel assembly bottom end piece (26) on two opposite sides and is variable in its centring dimension, in that a carriage (13) carrying the manipulator (7) can be traversed in two directions, in that the drive elements of the manipulator (7) are arranged in a water-protected space (46) which is bounded by a base plate (11) supporting the drive elements and a cover shroud (45), in that the probe (10) is arranged outside the water-protected space (46), and in that a component (53) transferring the movement sequences of the drive elements to the probe passes through the base plate (11).

2. Apparatus according to Claim 1, characterized in that T-shaped grooves (6) are incorporated in the base plate (11) in which grooves the bolts (4) can be displaced and fixed in the manner of a sliding block.

3. Apparatus according to Claim 1, characterized in that the centring receptacle (22) consists of a counter bearing (23) secured on the base plate and an eccentric shaft (28) arranged opposite said counter bearing, which eccentric shaft can be moved under remote control by means of a rocker (30), a stop (31), which limits the movement of the eccentric shaft, being secured on the eccentric shaft axis.

4. Apparatus according to Claim 1, characterized in that the centring receptacle (22) is formed by jaws (34) which can be moved in opposing directions along a guide (35).

5. Apparatus according to Claim 1, characterized in that the carriage (13) carrying the manipulator (7) is guided in rails (20) attached to the base plate (11), in that the carriage movement is performed by means of a remote-controllable linkage (38) and/or with the aid of a hydraulic/pneumatic cylinder, and in that the carriage (13) has several fitting holes (14) into which extend fitting pins (12), which protrude form the base plate (11) and are retained by means of a thread connection.

6. Apparatus for the inspection of fuel rods which are combined to form a complete fuel assembly (9) while maintaining intermediate spaces, the fuel assembly being held by a carrier enclosure and the carrier enclosure being assigned a manipulator (7) for the moving in two coordinates in one plane of a probe (10) which can be inserted into the intermediate spaces, characterized in that the carrier enclosure (1) is a fuel assembly repair station with a fuel assembly container (118), the fuel assembly (9) being supported and centred by means of its top end piece (32) in the fuel assembly container (18), in that the manipulator (7) is arranged on a bracket (129) of the fuel assembly repair station, in that the cladding tubes, facing the bottom end piece (26), of the fuel assembly (9) project so far beyond the lower edge (127) of the fuel assembly container (118) that the probes (10) of the manipulator (7) can be moved into the spaces between the cladding tubes, in that the drive elements of the manipulator are arranged in a water-protected space (46), which is bounded by a base plate (11) carrying the drive elements and by a cover shroud (45), in that the probe (10) is arranged outside the water-protected space and in that a component (53) transferring the movement sequences of the drive elements onto the probe passes through the base plate (11).

7. Apparatus according to Claim 1 or 6, characterized in that compressed air is admitted to the water-protected space (46), the air pressure being higher than the water pressure prevailing outside the space (46), and a monitoring device (52) indicating a leakage of the space.

8. Apparatus according to Claim 1 or 6, characterized in that the component (53) has a flange (54) taken through the base plate (11) and bolted to the same, in that a hollow shaft (58) and a solid shaft (57) extend coaxially through the flange (54), in that a lever is coupled to each of the free ends of solid shaft and hollow shaft, which lever is pivotally connected to a further lever in such a way that at each there is formed within the water-protected space (46) a mirror-inverted lever linkage in the form of a parallelogram, which has its fixed point (85, 106) whithin the space (46) on a carriage (84) executing the linear drive movements and outside the space on a carriage (104) carrying the probes (10).

9. Apparatus according to Claim 8, characterized in that the carriage (84) forming the fixed point of the lever linkage is moved by two recirculating ball screws (87, 93) each driven by a stepping motor (90, 92).

10. Apparatus according to Claim 8, characterized in that the carriage (104) carrying the probes (10) is assigned a force transducer (116) as collision protection for the probes (10).

Fig.2a

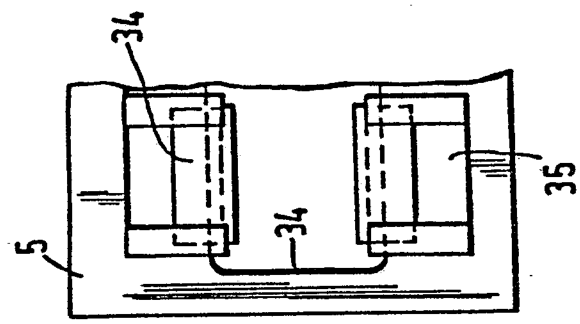


Fig.1

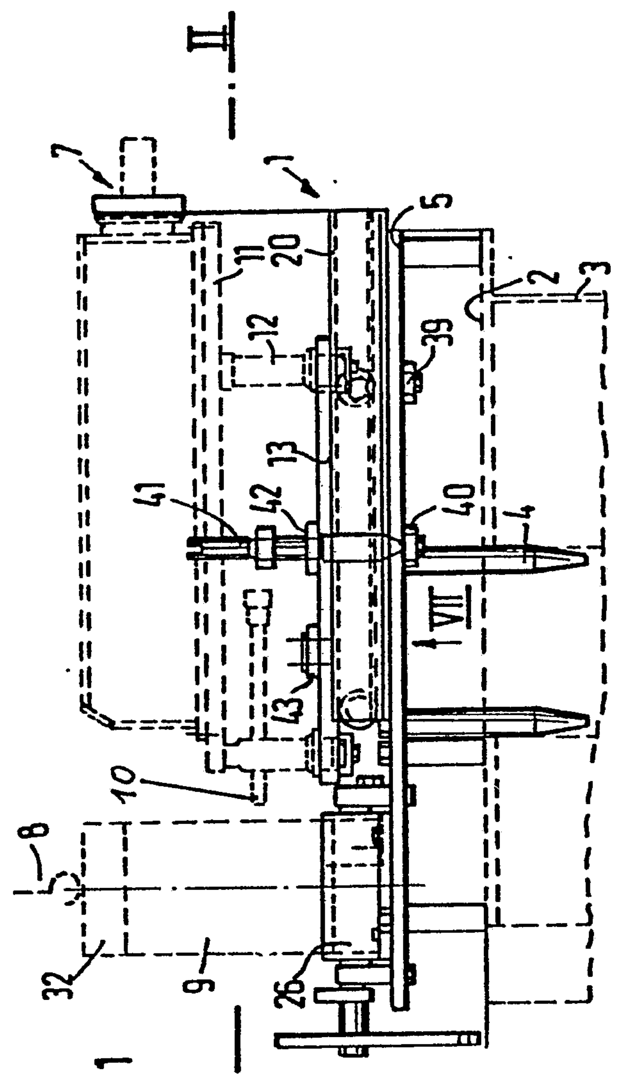


Fig.2

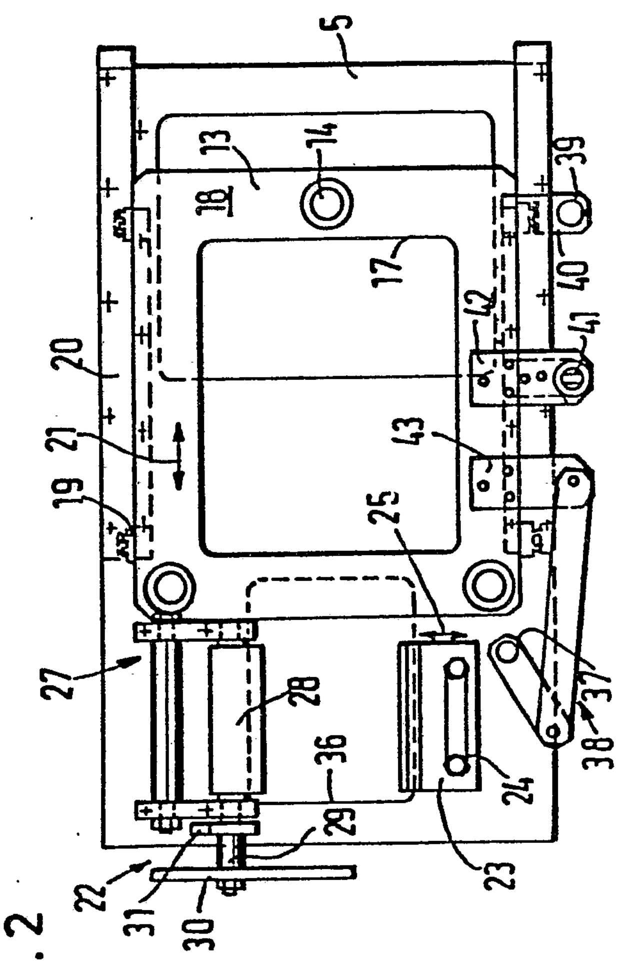

2/7

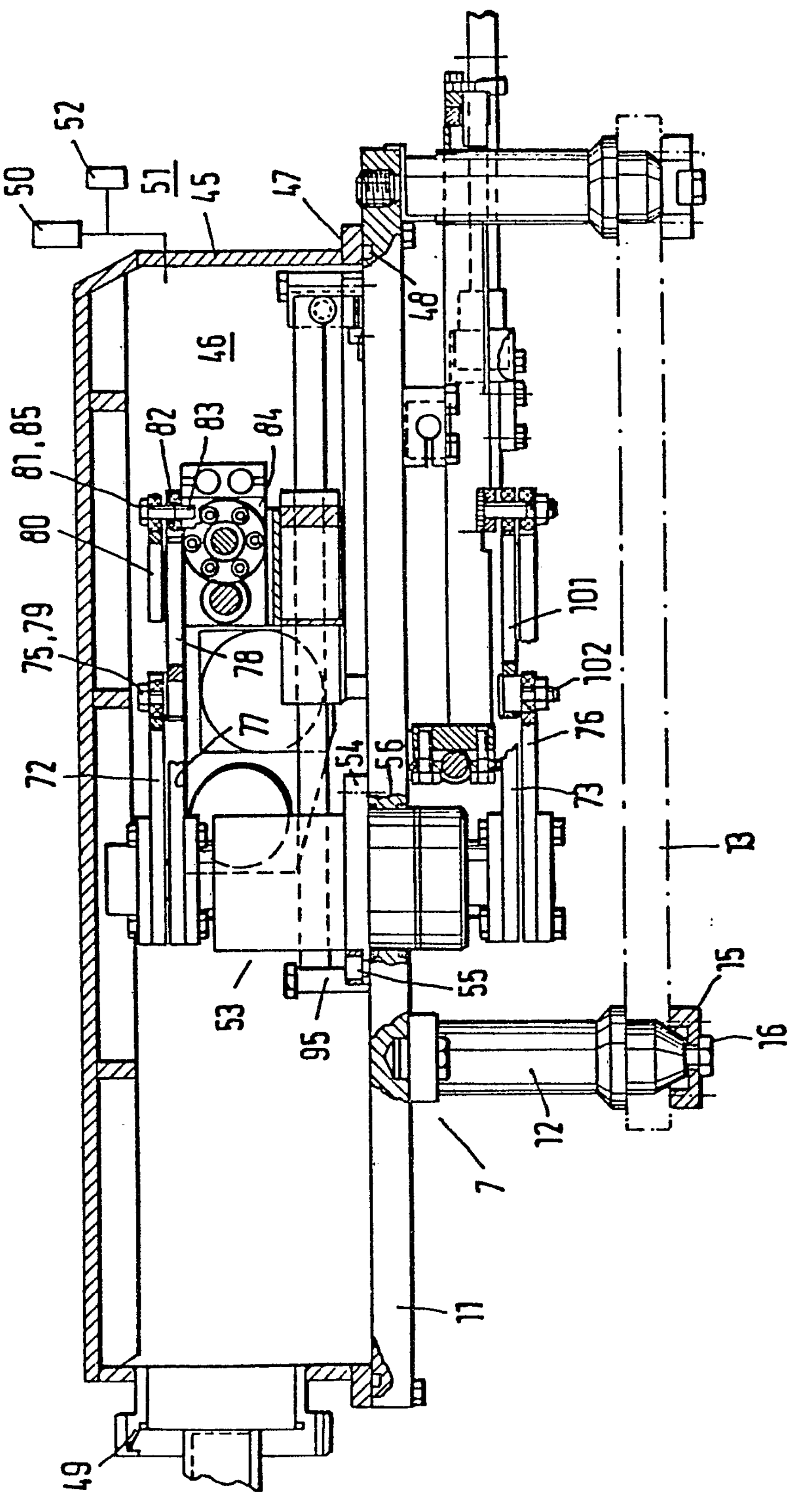

50
52
51
45
47
48
46
81,85
82
83
84
80
75,79
78
77
72
54
56
101
102
76
73
13
53
55
95
15
16
12
7
11
49


Fig. 3

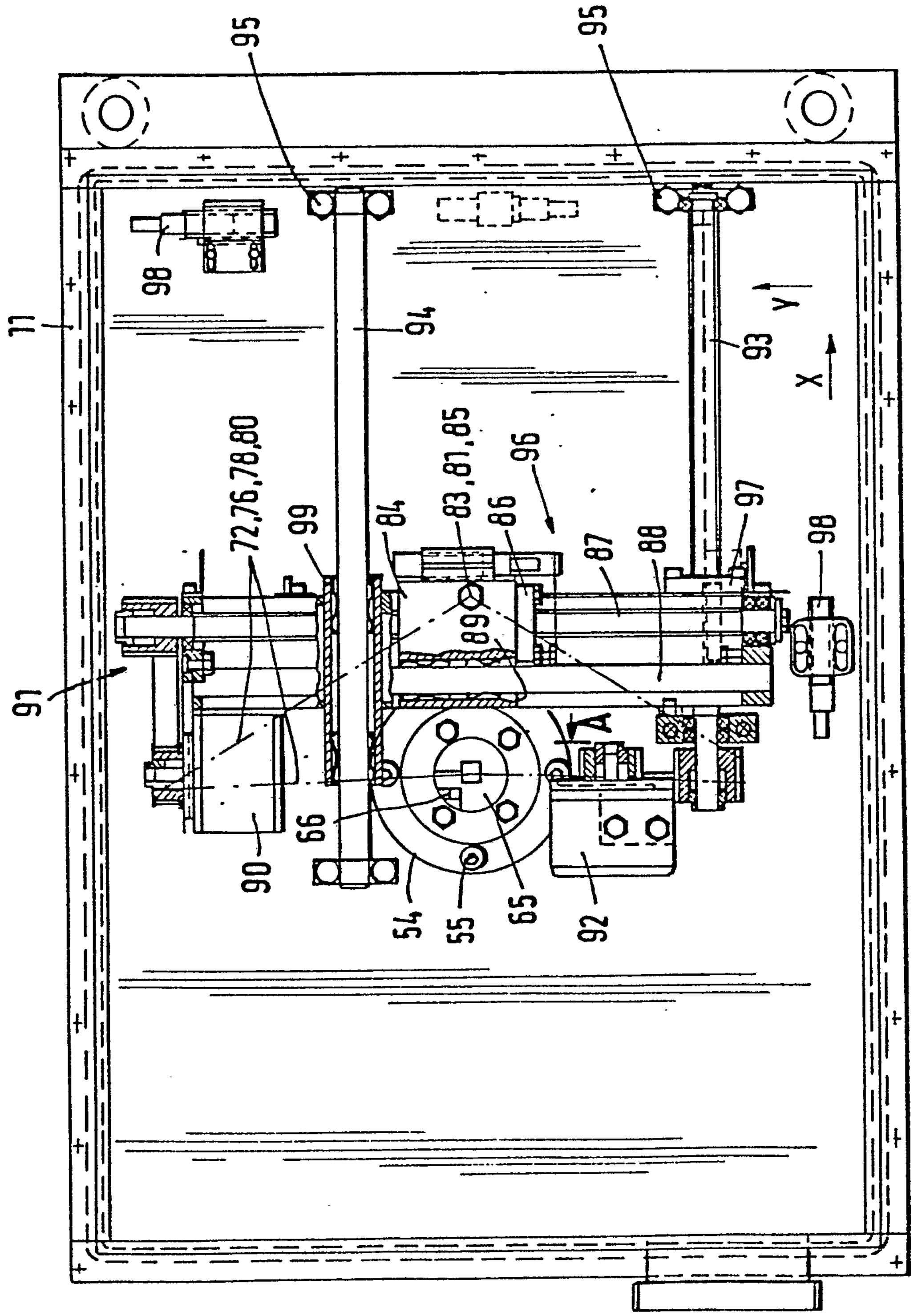
95
95
98
11
94
93
y
x
72,76,78,80
83,81,85
96
99
84
86
87
88
97
98
89
91
A
66
90
54
55
65
92

Fig. 4

Fig. 5a

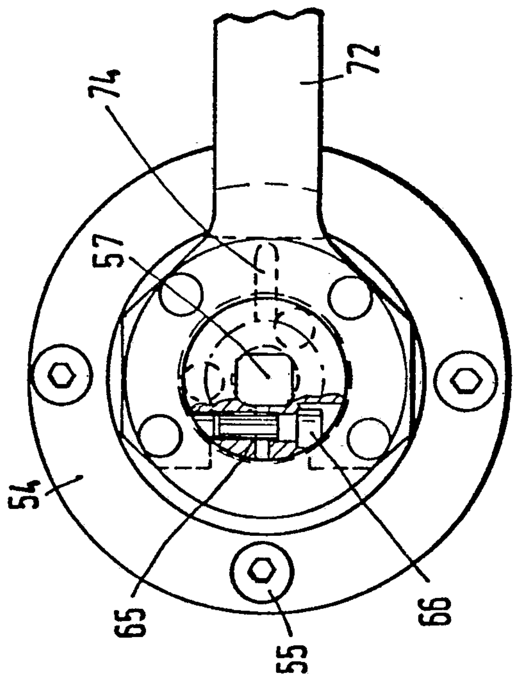
72
74
57
54
65
55
66

Fig. 5

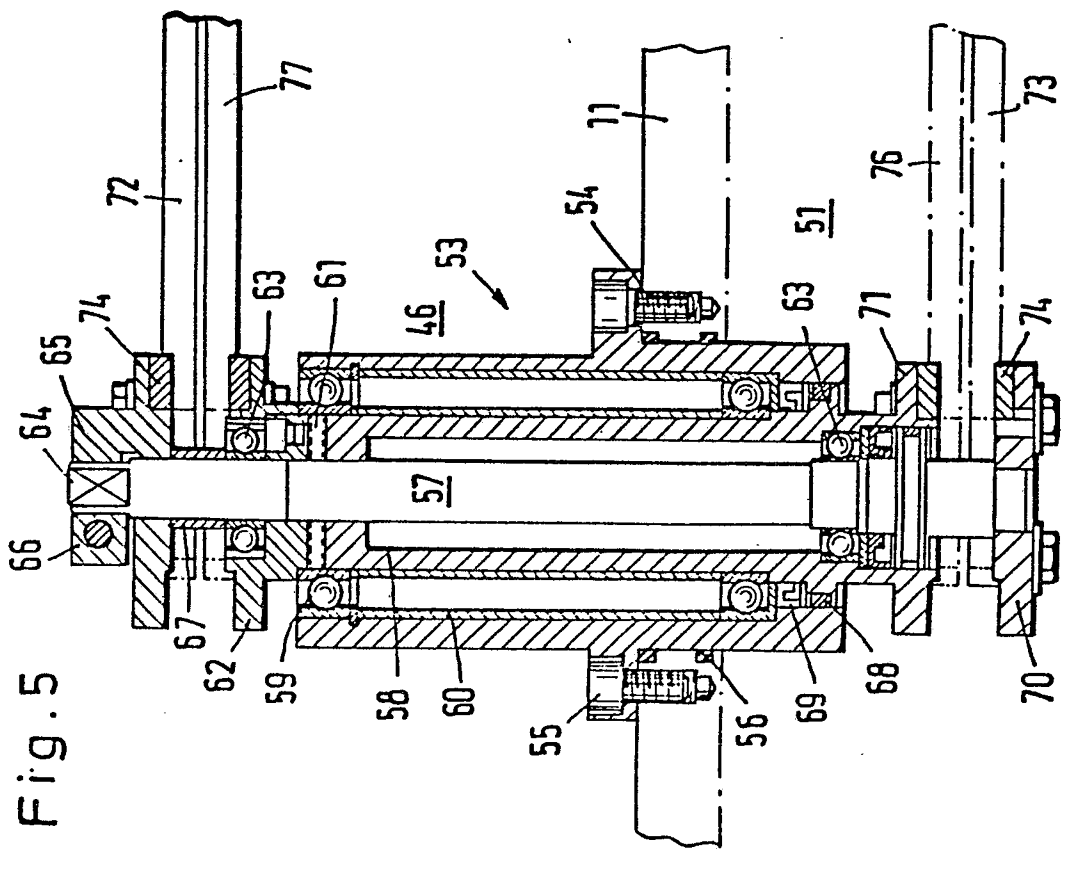
77
72
11
73
76
54
51
53
46
61
63
74
65
64
57
66
67
62
59
58
60
55
56
69
68
70
71

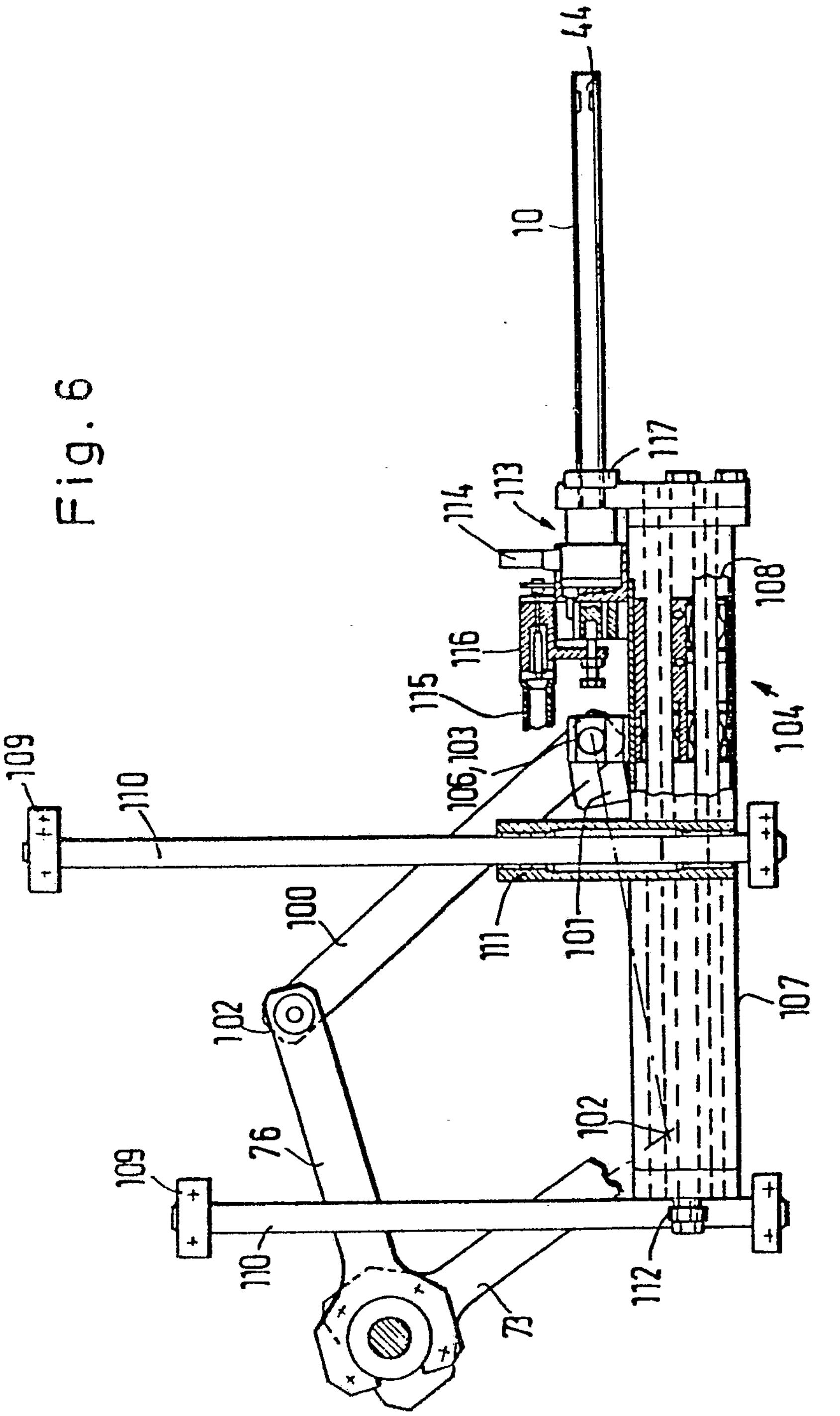
44
10
117
113
114
108
116
115
104
106,103
109
110
111
101
100
102
107
76
102
109
110
112
73

Fig. 6

Fig. 7

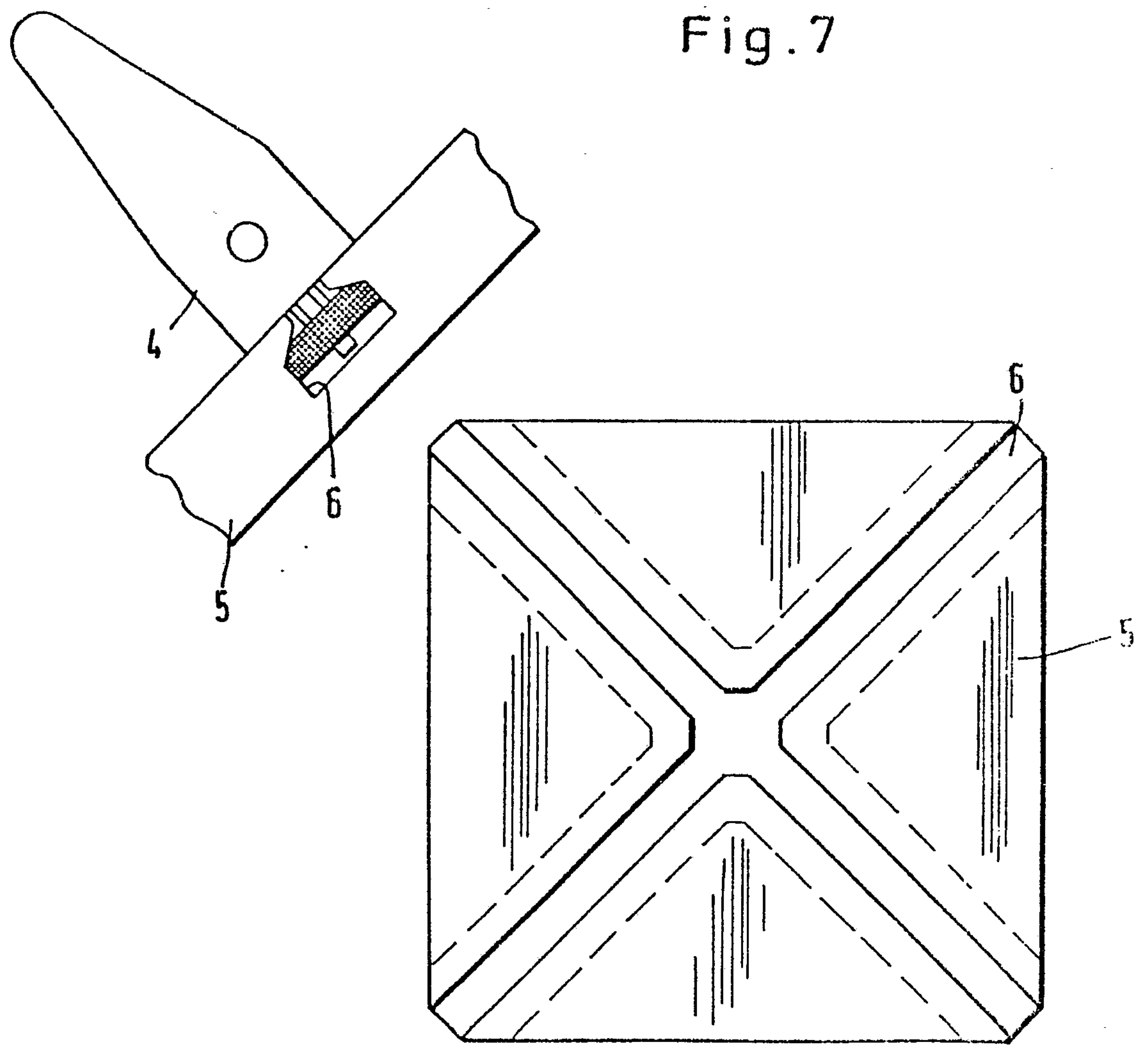

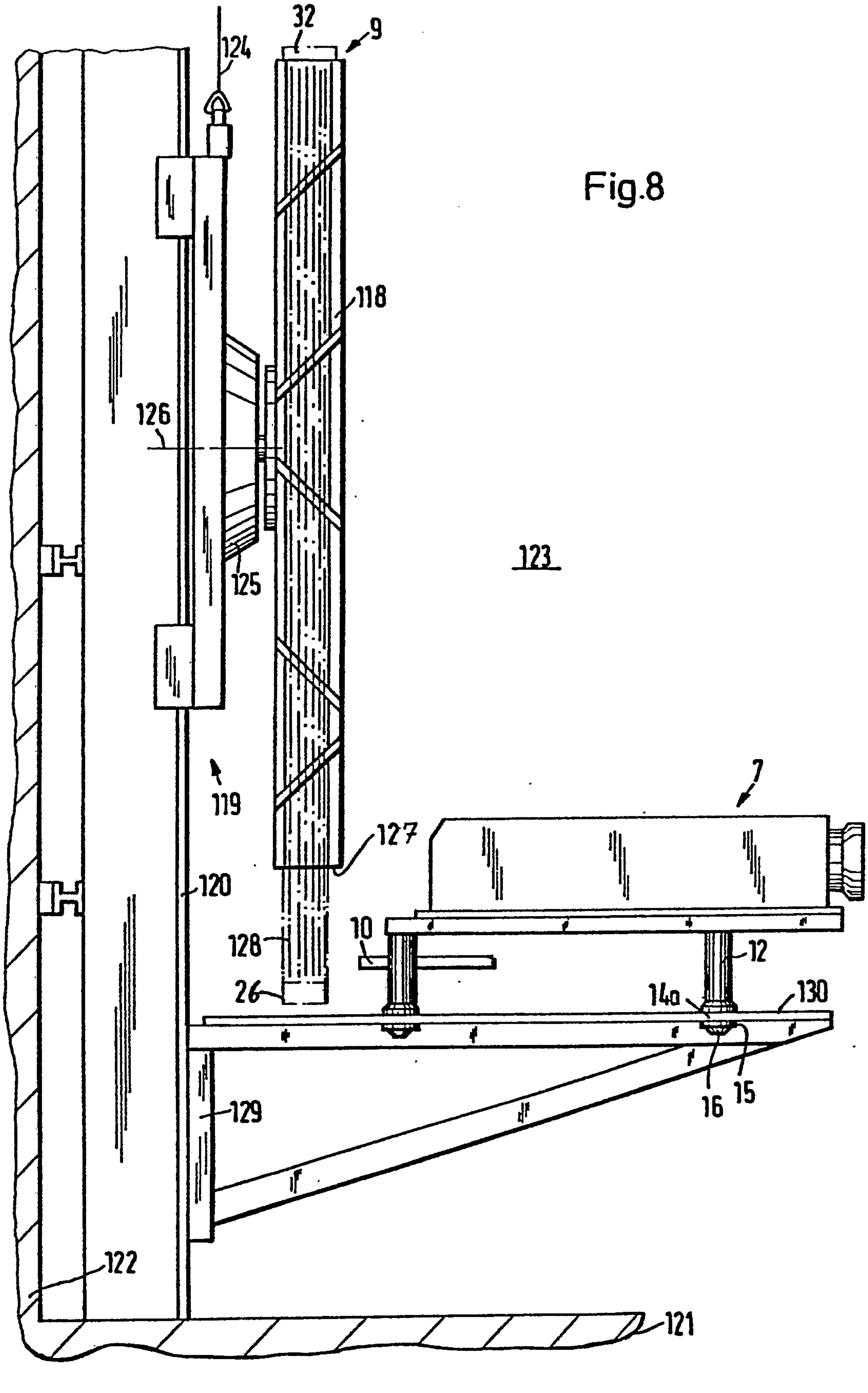
32
9
124
118
126
125
123
119
7
127
120
10
128
12
26
14a
130
16
15
129
122
121

Fig.8